**Europäisches Patentamt**

**European Patent Office**

**Office européen des brevets**

(19)

(11) Veröffentlichungsnummer : **0 337 244 B1**

(12) # EUROPÄISCHE PATENTSCHRIFT

(45) Veröffentlichungstag der Patentschrift :
**02.09.92 Patentblatt 92/36**

(51) Int. Cl.$^5$ : **A22C 13/00, B65D 75/62**

(21) Anmeldenummer : **89105853.9**

(22) Anmeldetag : **04.04.89**

(54) **Schlauchhülle, insbesondere künstliche Wursthülle, mit längsaxialem Klebeband.**

(30) Priorität : **13.04.88 DE 8804813 U**

(43) Veröffentlichungstag der Anmeldung :
**18.10.89 Patentblatt 89/42**

(45) Bekanntmachung des Hinweises auf die
Patenterteilung :
**02.09.92 Patentblatt 92/36**

(84) Benannte Vertragsstaaten :
**AT BE CH DE FR GB IT LI NL SE**

(56) Entgegenhaltungen :
**EP-A- 0 037 543**
**EP-A- 0 224 808**
**DE-A- 2 655 253**
**GB-A- 460 506**

(73) Patentinhaber : **HOECHST**
**AKTIENGESELLSCHAFT**
**Postfach 80 03 20**
**W-6230 Frankfurt am Main 80 (DE)**

(72) Erfinder : **Kastl, Erna**
**Pulvermühle 1**
**W-6272 Niedernhausen (DE)**
Erfinder : **Mathieu, Marion**
**Roonstrasse 1**
**W-6503 Mainz-Kastel (DE)**
Erfinder : **Görres, Anton**
**Buchenweg 5**
**W-6239 Eppstein-Vockenhausen (DE)**

EP 0 337 244 B1

## Beschreibung

Die Erfindung bezieht sich auf eine schlauchförmige Lebensmittelhülle, insbesondere künstliche Wursthülle, von der im Oberbegriff des Anspruchs 1 genannten Art.

Solche Schlauchhüllen sind beispielsweise aus den Europ. Patentschriften 0 037 543 und 0 054 162 bekannt geworden, ihre Herstellung wird insbesondere in der EP-A-0 080 120 und DE-OS 32 44 372, eine Vorrichtung zur Herstellung dieser Schlauchhülle in der EP-A-0 224 808 beschrieben.

Diese Schlauchhüllen zeigen den Nachteil, daß sie sich nur schwierig spiralförmig, d.h. in Richtung des Schlauchumfangs, vom Füllgut, insbesondere von der Wurstmasse, abziehen lassen. Das Ein- und Weiterreißen der Schlauchfolie endet meist am längsaxial sich erstreckenden Klebeband, welches quer zur Einrißspur verläuft und ein Weiterreißen der Folie praktisch unmöglich macht. Es ist deshalb erforderlich, das Klebeband mit einem Werkzeug zu durchtrennen, um dann die Folie weiter einreißen zu können.

Die Aufgabe der Erfindung besteht somit darin, diese Schlauchhüllen mit Klebeband so zu verbessern, daß sie sich ohne Probleme vom Füllgut abtrennen lassen.

Diese Aufgabe wird überraschenderweise dadurch gelöst, daß die Schlauchhülle die in Anspruch 1 genannten Merkmale aufweist. Die abhängigen Ansprüche 2 bis 8 geben besondere Ausführungsformen der Schlauchhülle an.

Die Schlauchhülle dient zur Verpackung von pastösen Lebensmitteln, insbesondere ist sie eine künstliche Wursthülle aus nicht eßbarem Material, welche vor dem Verzehr entfernt werden muß. Sie besteht aus einer Folie, die zu einem Schlauch gebogen ist. Der Schlauch hat in gefülltem Zustand kreiszylindrische Form. Die Schlauchhülle besteht aus einem ursprünglich blatt- oder bahnförmigen Folienzuschnitt oder einer endlosen Folienbahn, welche um die Längsachse gebogen wurden. Die infolge dieser Faltung aneinander stoßenden längsaxial zur Schlauchlänge sich erstreckenden Randzonen sind in der Stoßnaht mit einem Klebeband miteinander verbunden, wobei das Klebeband beide Randzonen überlappt und dem Lauf der Stoßnaht folgt. Das Klebeband befindet sich auf der Außen- oder Innenseite der Schlauchhülle. Es besteht aus einer Trägerfolie und gegebenenfalls einer Siegel- oder Klebstoffschicht.

Für die Lösung der obengenannten Aufgabe ist es wesentlich, daß bei Schlauchhüllen dieser Art das Klebeband eine Vielzahl von quer, insbesondere senkrecht zur Längsrichtung des Klebebandes sich erstreckenden Einschnitten aufweist. Besonders vorteilhaft sind Klebebänder, deren Trägerfolie gefiedert ist. Diese Einschnitte ermöglichen das Weiterreißen der Folie der Schlauchhülle im Bereich des Klebebandes, da das Klebeband im Einschnitt durch- und weiterreißt.

Eine weitere Voraussetzung für ein einwandfreies Abziehen der Hülle besteht darin, daß das Klebeband zumindest im Bereich der Einschnittenden mit der Folie der Schlauchhülle fest verbunden ist. D.h. die Klebenaht muß mindestens so breit sein, daß das Klebeband in einem Teil der jeweiligen Einschnittlänge, nämlich am jeweiligen Ende der Einschnitte, fest an der Folie haftet. Dies ist besonders wichtig, wenn das Klebeband nicht über seine ganze Breite, d.h. nicht vollflächig mit der Folie verbunden ist. Schließlich ist es auch erforderlich, daß die Verbundfestigkeit zwischen Klebeband und Folie größer ist als die Einreißfestigkeit der Folie, da sich beim Abschälen der Hülle andernfalls das Klebeband von der Folie ablösen würde, bevor die Folie einreißt.

Der Winkel, den die möglichst geradlinigen Einschnitte mit der Längsachse des Klebebandes bilden, sollte nicht unter 30° liegen, zweckmäßig sind Winkel von größer als 60°.

Gewöhnlich sind die Einschnitte an beiden Rändern des Klebebands vorhanden, so daß die Einreißrichtung beim Abziehen der Hülle vom Füllgut freisteht. Der gegenseitige Abstand der Einschnitte sollte möglichst gering sein, so daß das Klebeband praktisch an jeder beliebigen Stelle ein- und durchreißen kann. Der gegenseitige Abstand sollte deshalb etwa 1 cm, insbesondere 0,5 cm nicht übersteigen. Der geringste Abstand liegt aus Gründen der Herstellungsmöglichkeiten bei etwa 0,5 mm. Die Länge der Einschnitte braucht nicht sonderlich groß zu sein, da bereits sehr kurze Längen das Durchreißen des Klebebandes ermöglichen. Bei einer Breite des Klebebandes von 6 bis 15, insbesondere 8 bis 12 mm, braucht die Einschnittlänge nicht länger als 2, insbesondere 1 mm zu sein. Es genügen bereits Längen von 0,5, sogar von 0,3 mm. Die Einschnitte können auch die Form von keilförmigen oder spitz zulaufenden Ausnehmungen, Kerben, Ausschnitte und dergleichen aufweisen.

Das Folienmaterial für die Schlauchhülle zeigt die für flexible Verpackungen, insbesondere Wursthüllen, übliche Dicke. Es umfaßt die für diese Zwecke üblichen ein- oder mehrschichtigen Kunststoff- und Cellulosefolien. Letztere besitzen gegebenenfalls eine Faserverstärkung. Sofern die Verbindung mit dem Klebeband durch Heißsiegelung hergestellt wird, besteht die Folie aus siegelfähigem Material oder besitzt zumindest eine siegelfähige Oberflächenschicht, insbesondere im Nahtbereich. Geeignete Folien zeigen beispielsweise folgenden Schichtaufbau: Polyamid/PVDC, Polyamid/PE, PVDC/Polyamid/PE, PVDC/Polyvinylalkohol/PVDC, Polyester/PVDC, Polyvinylalkohol/PE, Cellulose/PVDC. Die PVDC-Schicht (Polyvinylidenchlorid) dient als Gasbarriere und als Siegelschicht.

Die Trägerfolie des Klebebands besteht zweckmäßigerweise aus dem gleichen Material wie die Folie der Schlauchhülle. Die Trägerfolie besteht somit aus einem siegelfähigen Material, oder auf ihrer Oberfläche, welche mit der Folie der Schlauchhülle in Kontakt tritt, ist eine Siegel- oder Klebstoffschicht vorhanden. Sie besteht beispielsweise aus einem Haftklebstoff, vorzugsweise jedoch aus einer Heißsiegelschicht, welche mit der Folie der Schlauchhülle den erforderlichen festen Verbund ergibt.

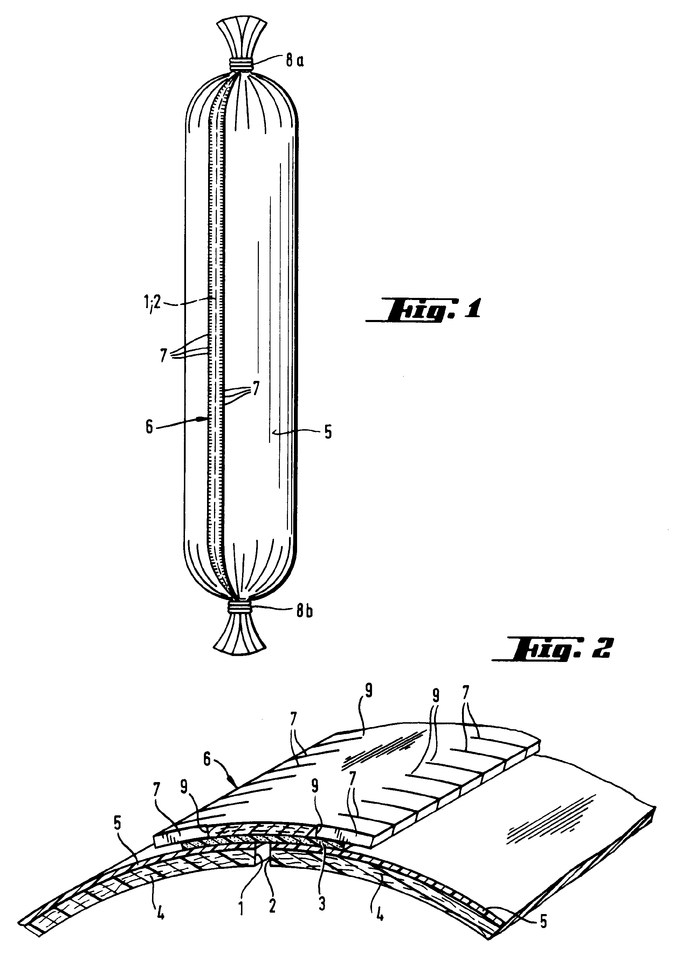

Die Erfindung wird anhand der Figuren 1 und 2 näher erläutert. Es zeigt

Figur 1 eine bevorzugte Ausführungsform, nämlich eine Wursthülle, im gefüllten Zustand in Seitenansicht,

Figur 2 einen vergrößerten Teilquerschnitt des Nahtbereichs der Wursthülle der Fig. 1.

Die Wursthülle besteht aus der zu einem Schlauch gebogenen Folie 4 (Fig. 2) mit der äußeren Überzugsschicht 5 und der Trägerfolie 6 des Klebebands, welches die auf Stoß genäherten Ränder 1,2 der Folie 4 überlappt. Die Trägerfolie 6 zeigt eine Vielzahl von Einschnitten 7 (Fig. 2), die sich etwa senkrecht zur Längsrichtung des Klebebandes und parallel zueinander erstrecken und an beiden Rändern der Trägerfolie 6 vorhanden sind. Mit 3 ist die Klebstoffschicht bezeichnet (Fig. 2). Die Breite der Klebstoffschicht 3, welche der Breite der Klebenaht entspricht, und die Länge der Einschnitte 7 sind so gewählt, daß die Trägerfolie 6 am jeweiligen Ende 9 der Einschnitte 7 fest an der Oberflächenschicht 5 der Folie 4 haftet. In einer bevorzugten Alternative ist 3 eine Heißsiegelschicht, ebenso besteht dann die Überzugsschicht 5 aus heißsiegelfähigem Material. Die Wursthülle ist an ihren Enden jeweils mit einem Metallclip 8a,8b verschlossen (Fig. 1).

**Patentansprüche**

1. Schlauchförmige Lebensmittelhülle, insbesondere künstliche Wursthülle, bestehend aus einer zu einem Schlauch gebogenen Folie (4), deren aneinander stoßenden oder sich überlappenden längsaxial und parallel zueinander sich erstreckenden Ränder (1,2) mit einem längsaxial auf der Schlauchinnenseite oder Schlauchaußenseite sich erstreckenden Klebeband miteinander verbunden sind, dadurch gekennzeichnet, daß das Klebeband eine Vielzahl von quer, insbesondere senkrecht, zu seiner Längsrichtung sich erstreckenden Einschnitten (7) aufweist, daß die Einschnitte (7) im Bereich der Klebenaht enden, wobei das Klebeband im Bereich des Einschnittendes (9) mit der Folie (4) fest verbunden ist, und daß die Verbundfestigkeit zwischen Klebeband und Folie (4) größer ist als die Einreißfestigkeit der Folie.

2. Hülle nach Anspruch 1, dadurch gekennzeichnet, daß die Einschnitte (7) an beiden Rändern des Klebebandes vorhanden sind.

3. Hülle nach Anspruch 1 oder 2, dadurch gekennzeichnet, daß die Einschnitte (7) im Abstand von 0,5 bis 10 mm, vorzugsweise bis 5 mm, voneinander entfernt sind.

4. Hülle nach einem der Ansprüche 1 bis 3, dadurch gekennzeichnet, daß die Länge der Einschnitte (7) 0,3 bis 2, insbesondere 0,5 bis 1 mm und die Breite des Klebebands 6 bis 15, insbesondere 8 bis 12 mm beträgt.

5. Hülle nach einem der Ansprüche 1 bis 4, dadurch gekennzeichnet, daß das Klebeband aus einer Trägerfolie (6) und einer Klebstoffschicht (3), insbesondere einem Haftklebstoff, aufgebaut ist.

6. Hülle nach einem der Ansprüche 1 bis 4, dadurch gekennzeichnet, daß zumindest die äußere Oberfläche der Folie (4) und die mit der Folie in Kontakt tretende Oberfläche des Klebebandes aus heißsiegelfähigem Material bestehen, wobei Folie (4) und Klebeband durch Heißsiegelung miteinander verbunden sind.

7. Hülle nach einem der Ansprüche 1 bis 6, dadurch gekennzeichnet, daß die Folie (4) aus einer oder mehreren Kunststoffschichten, insbesondere aus Polyamid, Polyolefin, Polyvinylidenchlorid, Polyvinylalkohol oder Polyester, aufgebaut ist.

8. Hülle nach einem der Ansprüche 1 bis 6, dadurch gekennzeichnet, daß die Folie (4) aus Cellulose aufgebaut ist und gegebenenfalls einen Kunststoffüberzug, insbesondere aus siegelfähigem Material, aufweist.

**Claims**

1.  Tubular food casing, in particular artificial sausage casing, comprising a film (4) which has been bent to form a tubing and whose edges (1,2) extending in the direction of the longitudinal axis and parallel to one another abut each other or are overlapped and are joined to one another by means of an adhesive tape extending in the direction of the longitudinal axis on the inside or outside of the tubing, wherein the adhesive tape exhibits a plurality of incisions (7) extending transversely, in particular perpendicularly, with respect to the longitudinal direction of the adhesive tape, wherein the incisions (7) end in the area of the glued seam, the adhesive tape being firmly bonded to the film (4) in the area of the incision ends (9), and wherein the bond strength between the adhesive tape and the film (4) is greater than the tear resistance of the film.

2.  The casing as claimed in claim 1, wherein the incisions (7) are present at both edges of the adhesive tape.

3.  The casing as claimed in claim 1 or 2, wherein the incisions (7) have mutual distances of 0.5 to 10 mm, preferably up to 5 mm.

4.  The casing as claimed in any of claims 1 to 3, wherein the length of the incisions (7) is 0.3 to 2 mm, in particular 0.5 to 1 mm, and the width of the adhesive tape is 6 to 15 mm, in particular 8 to 12 mm.

5.  The casing as claimed in any of claims 1 to 4, wherein the adhesive tape comprises a support film (6) and an adhesive layer (3), in particular of a pressure-sensitive adhesive.

6.  The casing as claimed in any of claims 1 to 4, wherein at least the external surface of the film (4) and that surface of the adhesive tape which enters into contact with the film are made of a heat-sealable material, the film (4) and the adhesive tape being bonded to one another by heat sealing.

7.  The casing as claimed in any of claims 1 to 6, wherein the film (4) comprises one or several layers of a plastic material, in particular, of polyamide, polyolefin, polyvinylidene chloride, polyvinyl alcohol or polyester.

8.  The casing as claimed in any of claims 1 to 6, wherein the film (4) comprises cellulose and optionally has a plastic coating, in particular, of a sealable material.

**Revendications**

1.  Enveloppe tubulaire pour aliments, en particulier boyau artificiel de saucisse, comprenant un film (4) courbé en un tube souple, film dont les bords (1,2), au contact l'un de l'autre ou se chevauchant, dirigés longitudinalement et parallèlement entre eux, sont liés entre eux par un ruban adhésif au niveau de la soudure bord à bord, le ruban adhésif s'étendant, suivant l'axe longitudinal, sur la face externe ou sur la face interne du tube souple, caractérisée en ce que le ruban adhésif présente une multitude d'incisions (7) transversales, en particulier perpendiculaires à son axe longitudinal, que les incisions (7) se terminent dans la zone du joint soudé, le ruban adhésif étant solidement lié au film (4) dans la zone terminale (9) des incisions, et que la solidité de la liaison entre le ruban adhésif et le film (4) est plus grande que la résistance à la déchirure du film.

2.  Enveloppe selon la revendication 1, caractérisée en ce que les incisions (7) sont présentes sur les deux bords du ruban adhésif.

3.  Enveloppe selon la revendication 1 ou 2, caractérisée en ce que les incisions (7) sont distantes les unes des autres de 0,5 à 10 mm, de préférence de jusqu'à 5 mm.

4.  Enveloppe selon une quelconque des revendications 1 à 3, caractérisée en ce que la longueur des incisions (7) vaut de 0,3 à 2 mm, en particulier de 0,5 à 1 mm, et la largeur du ruban adhésif vaut de 6 à 15 mm, en particulier de 8 à 12 mm.

5.  Enveloppe selon une quelconque des revendications 1 à 4, caractérisée en ce que le ruban adhésif est constitué d'un film support (6) et d'une couche adhésive (3), en particulier d'un adhésif sensible à la pression.

6. Enveloppe selon une quelconque des revendications 1 à 4, caractérisée en ce qu'au moins la surface externe du film (4) et la surface du ruban adhésif en contact avec le film se composent de matériau thermoscellable, le film (4) et le ruban adhésif étant liés ensemble par thermoscellage.

7. Enveloppe selon une quelconque des revendications 1 à 6, caractérisée en ce que le film (4) est constitué d'une ou de plusieurs couche(s) de matière plastique, en particulier de polyamide, de polyoléfine, de poly(chlorure de vinylidène), de poly(alcool vinylique) ou de polyester.

8. Enveloppe selon une quelconque des revendications 1 à 6, caractérisée en ce que le film (4) est constitué de cellulose et éventuellement d'un revêtement en matière plastique, en particulier d'un matériau scellable.

_Fig. 1_

_Fig. 2_